# DEMANDE DE BREVET EUROPEEN

(11) **EP 4 810 227 A1**
(43) Date de publication de la demande: **23.09.2026**
(21) Numéro de dépôt: 26162956.2
(22) Date de dépôt: 06.03.2026
(51) Int. Cl.: B29C 49/42, B08B 5/00, B08B 5/02

(54) **DISPOSITIF DE DEPOUSSIERAGE DE PREFORMES**

(30) Priorité: 21.03.2025 FR 2502934
(71) Demandeur: Sidel Participations, 76930 Octeville-sur-Mer (FR)
(72) Inventeur: MOUCHELET, Marc, 76930 OCTEVILLE-SUR-MER (FR)
(74) Mandataire: Sidel Group

(57) **Abrégé**

L'invention concerne un dispositif (20) de dépoussiérage de l'intérieur de préformes (22) par insufflation de gaz qui comporte :
- un dispositif (32) de transport comportant des organes (34) de maintien des préformes (22) ;
- au moins un tubes (36) d'insufflation monté sur un support (38) mobile pour être déplacé en coïncidence avec un organe (34) de maintien ;
- chaque tube (36) d'insufflation étant monté coulissant axialement sur le support (38) mobile par l'intermédiaire d'un chariot (40) entre une position (P1) axiale active inséré à l'intérieur d'une préforme (22), et une position (P0) axiale escamotée,
caractérisé en ce qu'il comporte des organes (78) mobiles de détection de la présence d'un chariot (40) dans une première position axiale déterminée, chaque organe (78) mobile de détection étant monté sur le support (38) mobile.

## Description

### Domaine technique de l'invention

L'invention concerne un dispositif de dépoussiérage de l'intérieur de préformes en matière thermoplastique par insufflation de gaz de traitement qui comporte :
- un dispositif de transport comportant des organes de maintien des préformes mobiles le long d'un circuit fermé ;
- des tubes d'insufflation dont chacun est monté sur un support mobile pour être déplacé en coïncidence avec un desdits organes de maintien associé le long du circuit fermé ;
- chaque tube d'insufflation étant monté coulissant axialement sur le support mobile par l'intermédiaire d'un chariot coulissant entre une position axiale active dans laquelle le tube d'insufflation est destiné à être inséré à l'intérieur d'une préforme portée par l'organe de maintien associé, et une position axiale escamotée dans laquelle le tube d'insufflation est destiné à être à l'extérieur d'une préforme portée par l'organe de maintien associé.

### Arrière-plan technique

On connaît de l'état de la technique des exemples de dispositif de dépoussiérage de l'intérieur de préformes en matière thermoplastique par insufflation d'un gaz sous pression.

De manière connue, les préformes en matière thermoplastique sont destinées à la fabrication de récipients, tels que des bouteilles, flacons, pots etc.

Les préformes sont généralement fabriquées par moulage par injection de matière thermoplastique préalablement à leur transformation en récipients, généralement sur autre site industriel. Les préformes sont alors transportées en vrac de leur site de fabrication jusqu'à celui de leur transformation et le plus souvent stockées sur chacun d'eux.

Par conséquent, on a pu constater que différents types de poussières étaient alors susceptibles de pénétrer à l'intérieur des préformes. Par « poussières », on entend de manière non limitative de fines particules de matière, tels que des grains de poussières mais encore des morceaux d'emballage comme du carton, etc. ou de matière thermoplastique notamment mais non exclusivement sous la forme de filaments.

Pour fabriquer des récipients, on rappelle que les préformes sont conditionnées thermiquement dans une unité de conditionnement thermique afin de ramollir la matière du corps en le chauffant à une température permettant ensuite sa transformation, par soufflage ou par étirage-soufflage, dans un des moules d'une unité de formage. Les récipients obtenus sont ensuite destinés à être remplis de divers produits dont la qualité nécessite que le récipient soit propre préalablement à son remplissage.

Il est donc connu de dépoussiérer les préformes avant leur formage.

Pour ce faire, le dispositif de dépoussiérage comporte des moyens d'insufflation constitués par des tubes qui sont aptes à insuffler de l'air comprimé à l'intérieur de la préforme. Le tube d'insufflation est monté sur un chariot coulissant axialement par rapport à la préforme, entre une position «P0» axiale escamotée et une position «P1» axiale active dans laquelle au moins une partie du tube est insérée à l'intérieur de la préforme.

Pour permettre une production des récipients à cadence élevée, les préformes sont constamment en déplacement à travers l'installation. Ainsi, le dispositif de dépoussiérage est équipé d'un dispositif de transport des préformes. L'opération de dépoussiérage est réalisée pendant le transport des préformes.

Il est impératif que les tubes d'insufflations puissent être commandés de manière synchronisée avec le flux de préformes pour éviter qu'il ne se produise des collisions entre les tubes et les préformes. En outre, il est aussi important de s'assurer que les tubes sont bien dans leur position «P1» axiale active pendant l'opération de dépoussiérage pour garantir l'obtention de récipients propres.

A cet effet, il est connu d'installer des organes fixes de détection de la position axiale des tubes d'insufflation. Ces organes de détections sont fixes par rapport au sol, de manière à détecter successivement la position axiale de chaque chariot lorsqu'il passe dans une zone déterminée de détection le long de leur trajet. Chaque organe fixe de détection est ainsi commun à tous les chariots.

Il est notamment connu d'équiper le dispositif de dépoussiérage d'un premier organe fixe de détection qui détecte lorsqu'un chariot occupe sa position «P1» axiale active, et d'un deuxième organe fixe de détection qui détecte lorsqu'un chariot occupe sa position «P0» axiale escamotée.

Cependant, en cas de défaillance de la commande de déplacement d'un chariot, une telle solution ne permet pas d'identifier rapidement quel chariot pose problème.

En outre, il était connu de commander le coulissement des chariots de manière dépendante au moyen d'une came commune. Un tel moyen de commande permet de réaliser un procédé ou cycle de dépoussiérage dit « simple » dans lequel chaque tube est commandé vers sa position «P1» axiale active en début de procédé de dépoussiérage, puis de l'air sous pression est insufflé dans la préforme, enfin le tube d'insufflation est à nouveau commandé vers sa position «P0» axiale escamotée. Dans un tel cycle « simple », chaque tube d'insufflation est ainsi commandé une fois dans sa position «P1» axiale active et une fois dans sa position «P0» axiale escamotée.

On a récemment proposé de remplacer un tel moyen de commande par des actionneurs individuels propres à chaque chariot. Ainsi chaque chariot peut être commandé en coulissement indépendamment des autres. Un tel actionneur individuel permet notamment de réaliser des cycles de dépoussiérage plus efficaces et plus « complexes » que ceux réalisés au moyen de cames. Dans de tels cycles « complexes » de dépoussiérage chaque tube de dépoussiérage peut être commandé plusieurs fois dans sa position «P1» axiale active et dans sa position «P0» axiale escamotée au cours du même cycle de dépoussiérage d'une même préforme. Il est de plus possible d'adapter le procédé de dépoussiérage à la cadence de fonctionnement de l'installation.

Dans ce contexte, les organes fixes de détection ne permettent pas de garantir que les procédés de dépoussiérage « complexes » soient réalisés correctement.

En outre, les actionneurs peuvent présenter un allongement de leur temps de réponse, notamment à cause de l'usure normal de certaines pièces ou en cas de dysfonctionnement. Or, un organe fixe de détection ne permet pas de contrôler le temps de réponse de chaque actionneur individuel.

### Résumé de l'invention

L'invention propose un dispositif de dépoussiérage de l'intérieur de préformes en matière thermoplastique par insufflation de gaz de traitement qui comporte :
- un dispositif de transport comportant des organes de maintien des préformes mobiles le long d'un circuit fermé ;
- des tubes d'insufflation dont chacun est monté sur un support mobile pour être déplacé en coïncidence avec un desdits organes de maintien associé le long du circuit fermé ;
- chaque tube d'insufflation étant monté coulissant axialement sur le support mobile par l'intermédiaire d'un chariot coulissant entre une position axiale active dans laquelle le tube d'insufflation est destiné à être inséré à l'intérieur d'une préforme portée par l'organe de maintien associé, et une position axiale escamotée dans laquelle le tube d'insufflation est destiné à être à l'extérieur d'une préforme portée par l'organe de maintien associé,
caractérisé en ce qu'il comporte des organes mobiles de détection de la présence d'un chariot associé dans une première position axiale déterminée, chaque organe mobile de détection étant monté sur le support mobile et chaque organe mobile de détection contrôlant en permanence tout au long du circuit si le chariot associé occupe ladite position axiale déterminée.

Selon d'autres caractéristiques du dispositif de dépoussiérage réalisé selon les enseignements de l'invention :
- au moins un des organes mobiles de détection détecte la présence du chariot dans sa position axiale escamotée ;
- au moins un des organes mobiles de détection détecte la présence du chariot dans une position axiale intermédiaire entre sa position axiale active et sa position axiale escamotée ;
- au moins un des organes mobiles de détection détecte la présence du chariot dans sa position axiale active ;
- chaque chariot est commandé par un actionneur indépendant associé ;
- plusieurs tubes d'insufflation sont fixés sur chaque chariot ;
- il comporte un organe fixe de détection de la présence de chaque chariot dans une position axiale déterminée lorsqu'ils passent dans une zone de détection du circuit fermé ;
- l'organe fixe de détection détecte la présence de chaque chariot dans sa position axiale active ;
- la position axiale escamotée est fixe tandis que la position axiale active est ajustable en fonction du modèle de préforme traité par le dispositif de dépoussiérage ;

L'invention concerne aussi un procédé de dépoussiérage de l'intérieur d'une préforme mettant en œuvre le dispositif de dépoussiérage selon les enseignements de l'invention, le procédé comportant au moins :
- une étape initiale de commande du chariot portant le tube d'insufflation associé à la préforme jusqu'à sa position axiale active dans laquelle le tube d'insufflation est inséré dans la préforme portée par l'organe de maintien ;
- une étape finale de commande du chariot portant le tube d'insufflation associé à la préforme jusqu'à sa position axiale escamotée dans laquelle le tube d'insufflation est totalement extrait dans la préforme portée par l'organe de maintien ;
caractérisé en ce qu'il comporte au moins les étapes suivantes insérées chronologiquement après l'étape initiale et avant l'étape finale:
- une première étape intermédiaire de commande du chariot portant le tube d'insufflation associé à la préforme jusqu'à sa position axiale escamotée dans laquelle le tube d'insufflation est totalement extrait de la préforme portée par l'organe de maintien ;
- une deuxième étape intermédiaire de commande du chariot portant le tube d'insufflation associé à la préforme jusqu'à sa position axiale active dans laquelle le tube d'insufflation est inséré dans la préforme portée par l'organe de maintien.

Selon d'autres caractéristiques du procédé réalisé selon les enseignements de l'invention :
- de l'air sous pression est insufflé dans la préforme par l'intermédiaire du tube d'insufflation à l'issue de l'étape initiale ;
- l'air sous pression est insufflé en continu jusqu'au début de l'étape finale ;
- l'air sous pression est insufflé de manière discontinue entre la fin de l'étape initiale et le début de l'étape finale ;
- l'air sous pression est insufflé uniquement lorsque le chariot occupe sa position axiale active.

### Brève description des figures

D'autres caractéristiques et avantages de l'invention apparaitront au cours de la lecture de la description détaillée qui va suivre pour la compréhension de laquelle on se reportera aux dessins annexés dans lesquels :
- la [Fig.1] est une vue de dessus qui représente schématiquement un dispositif de dépoussiérage réalisé selon les enseignements de l'invention ;
- la [Fig.2] est une vue en perspective qui représente schématiquement le dispositif de dépoussiérage de la [Fig.1], seule une partie des tubes d'insufflation du dispositif ayant été représentés pour des raisons de clarté ;
- la [Fig.3] est une vue en perspective de derrière qui représente l'un des postes de dépoussiérage qui équipe le dispositif de dépoussiérage de la [Fig.1] ;
- la [Fig.4] est une vue en section selon le plan de coupe 4-4 de la [Fig.1] qui représente schématiquement un poste de dépoussiérage dans lequel le tube d'insufflation occupe sa position escamotée ;
- la [Fig.5] est une vue en section selon la plan de coupe 5-5 de la [Fig.1] qui représente schématiquement un poste de dépoussiérage dans lequel le tube d'insufflation occupe sa position active ;
- la [Fig.6] est un diagramme qui représente en abscisse la position d'un poste de dépoussiérage du dispositif de dépoussiérage de la [Fig.1] le long de son circuit fermé, et en ordonnée, à gauche, la position axiale du tube d'insufflation et, en ordonnée, à droite, la commande d'insufflation d'air sous pression par le tube d'insufflation, le diagramme représentant le fonctionnement du dispositif de dépoussiérage selon un cycle de dépoussiérage simple ;

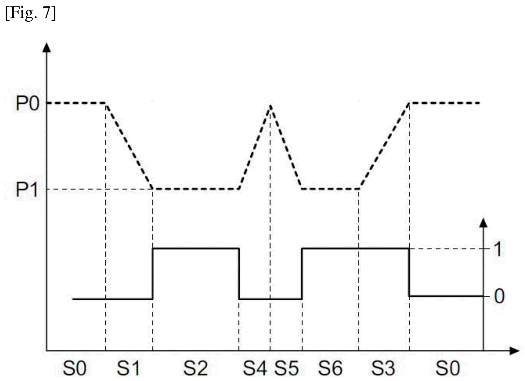

- la [Fig.7] est un diagramme similaire à celui de la [Fig.6] représentant le fonctionnement du dispositif de dépoussiérage selon un cycle de dépoussiérage complexe.

### Description détaillée de l'invention

Dans la suite de la description, des éléments présentant une structure identique ou des fonctions analogues seront désignés par une même référence.

Dans la suite de la description, on adoptera à titre non limitatif une orientation axiale parallèle à un axe "Z0" d'une préforme 22 portée par un organe 34 de maintien du dispositif 20 de dépoussiérage et dirigée de bas en haut selon une flèche "A" des figures. Dans les exemples représentés aux figures, la direction axiale correspond, de manière non limitative, avec la direction de la gravité.

On définit aussi un plan horizontal qui est orthogonal à la direction axiale.

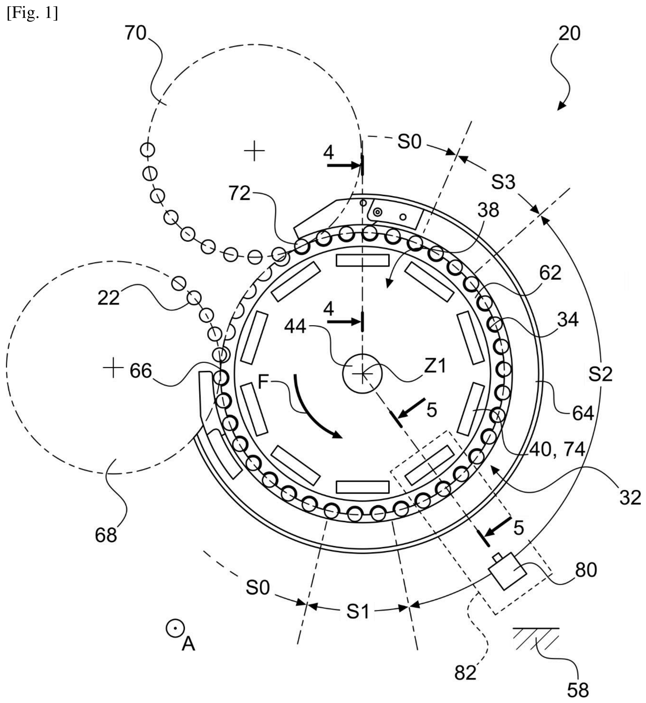

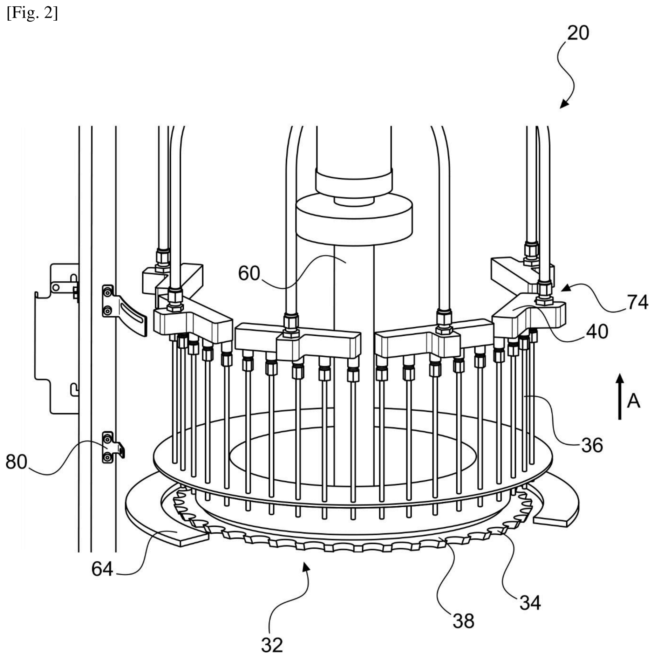

On a représenté aux figures 1 et 2 un dispositif 20 de dépoussiérage de l'intérieur de préformes 22 en matière thermoplastique par insufflation de gaz sous pression. Le gaz sous pression est par exemple de l'air.

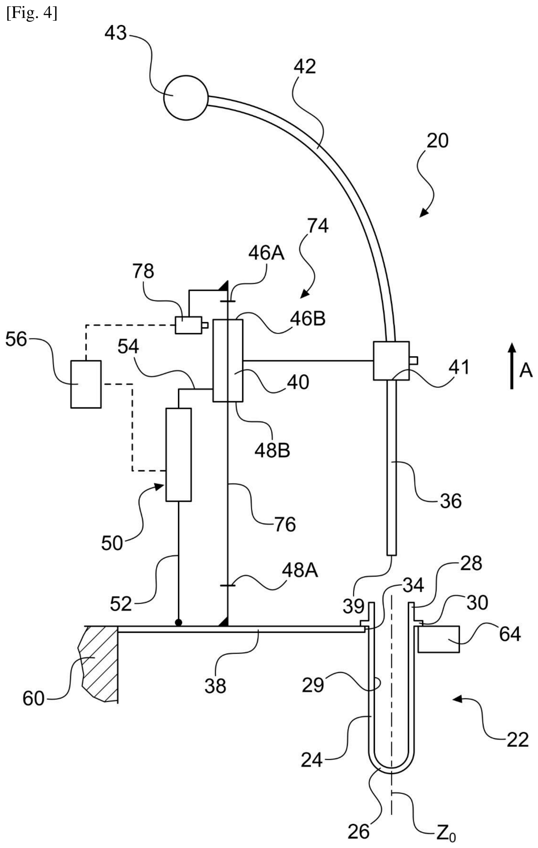

Une telle préforme 22 est représentée à la [Fig.4]. Elle est réalisée en matériau thermoplastique, ici en polyéthylène téréphtalate (PET). Elle est classiquement obtenue par moulage par injection. Elle présente une forme sensiblement axisymétrique autour d'un axe "Z0" principal d'orientation verticale.

Comme représenté à la [Fig.4], elle présente un corps 24 cylindrique à paroi tubulaire fermé à son extrémité inférieure par un fond 26, et qui est prolongé à son extrémité supérieure par un col 28 ouvert axialement vers le haut, lui aussi tubulaire. Une face 29 interne de la paroi délimite l'intérieur de la préforme 22. Le col 28 est généralement injecté de manière à posséder déjà sa forme définitive tandis que le corps 24 de la préforme 22 est destiné à subir une déformation relativement importante pour former le récipient final lors d'une étape ultérieure de formage.

Le col 28 de la préforme 22 comporte aussi une collerette 30 annulaire qui fait saillie radialement. La collerette 30 est ici agencée à la jonction entre la base du col 28 et le corps 24.

Un tel dispositif 20 de dépoussiérage est par exemple intégré à une installation de fabrication de récipients par soufflage ou étirage-soufflage des préformes 22. Il est par exemple agencé en amont d'une unité de conditionnement thermique qui a pour but de chauffer le corps 24 des préformes 22 au-delà d'une température de transition vitreuse pour permettre son formage ultérieur dans une unité de formage. Il s'agit d'une installation de fabrication dans laquelle les préformes 22 sont en déplacement constant pour permettre une production en grandes séries.

Ainsi, le dispositif 20 de dépoussiérage comporte un dispositif 32 de transport des préformes 22. Le dispositif 32 de transport comporte des organes 34 de maintien des préformes 22. Les organes 34 de maintien sont mobiles le long d'un circuit fermé.

Le dispositif 20 de dépoussiérage comporte aussi des tubes 36 d'insufflation dont chacun est monté sur un support 38 mobile pour être déplacé en coïncidence avec un desdits organes 34 de maintien associé le long du circuit fermé. Le dispositif 20 de dépoussiérage comporte ici autant de tubes 36 d'insufflation que d'organes 34 de maintien.

Le support 38 mobile se déplace conjointement avec l'organe 34 de maintien associé. Ainsi, chaque organe 34 de maintien se déplace en coïncidence avec un tube 36 d'insufflation associé.

Dans le mode de réalisation représenté aux figures, les organes 34 de maintien sont portés par le support 38 mobile associé.

Dans l'exemple représenté aux figures, et qui sera décrit plus en détails par la suite, tous les tubes 36 d'insufflation sont portés par un même support 38 mobile.

En variante non représentée de l'invention, le dispositif 20 de dépoussiérage peut comporter plusieurs supports mobiles distincts susceptibles de se déplacer indépendamment. Chaque support mobile peut porter un ou plusieurs tubes d'insufflation.

Chaque tube 36 d'insufflation est ici un tube rigide rectiligne qui s'étend selon un axe parallèle avec l'axe « Z0 » d'une préforme 22 portée par l'organe 34 de maintien associé. La préforme 22 portée par l'organe 34 de maintien est destinée à présenter son col 28 tourné vers le tube 36 d'insufflation.

Chaque tube 36 d'insufflation présente une extrémité inférieure libre qui est munie d'une buse 39 d'insufflation et une extrémité supérieure munie d'un orifice 41 d'alimentation qui est destiné à être raccordé à une source 43 de gaz de dépoussiérage sous pression. Le gaz est par exemple à une pression de 7 bars.

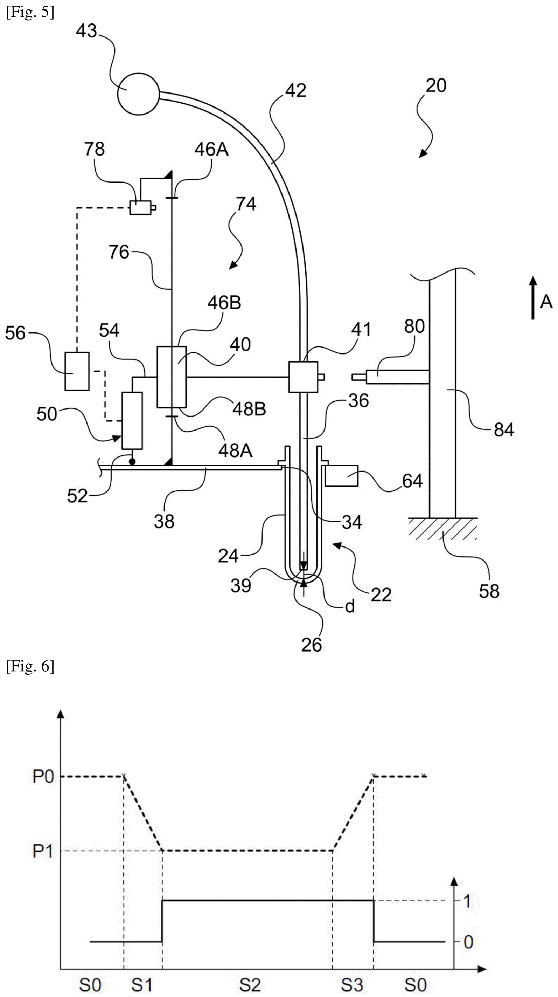

Chaque tube 36 d'insufflation est fixé à un chariot 40 coulissant sur le support 38 mobile. Ainsi chaque tube 36 d'insufflation est monté coulissant axialement sur le support 38 mobile par l'intermédiaire d'un chariot 40 coulissant entre une position «P1» axiale active dans laquelle le tube 36 d'insufflation est inséré à l'intérieur de la préforme 22 portée par l'organe 34 de maintien associé, comme représenté à la [Fig.5], et une position «P0» axiale escamotée dans laquelle le tube 36 d'insufflation est destiné à être à l'extérieur d'une préforme 22 portée par l'organe 34 de maintien associé, comme représenté à la [Fig.4].

Chaque tube 36 d'insufflation est raccordé à la source 43 de gaz, ici d'air, sous pression par l'intermédiaire d'un conduit 42 flexible, permettant ainsi le coulissement du tube 36 d'insufflation.

En outre, lorsque la source 43 de gaz est fixe par rapport au sol, chaque conduit 42 flexible peut être raccordé à ladite source 43 de gaz par l'intermédiaire d'un joint 44 tournant ou par tout autre organe de raccordement adapté.

Dans sa position «P0» axiale escamotée, représentée à la [Fig.4], le tube 36 d'insufflation est agencé au droit de l'ouverture du col 28 de manière que le tube 36 d'insufflation puisse pénétrer à l'intérieur de ladite préforme 22 par son col 28 lors de son coulissement vers sa position «P1» axiale active. Dans cette position «P0» axiale escamotée, le tube 36 d'insufflation est entièrement extrait de la préforme 22 portée par l'organe 34 de maintien associé pour permettre le transfert de la préforme 22 dépoussiérée hors de son organe 34 de maintien par déplacement orthogonalement à son axe « Z0 » et la réception d'une nouvelle préforme 22 dans l'organe 34 de maintien par déplacement orthogonalement à son axe « Z0 ».

Dans le mode de réalisation représenté aux figures, en position «P1» axiale active, un tronçon d'extrémité inférieur rectiligne axial du tube 36 d'insufflation est destiné à être inséré à l'intérieur d'une préforme 22 portée par l'organe 34 de maintien associé par son col 28. Dans cette position «P1» axiale active, la buse 39 d'insufflation est agencée à une faible distance "d" déterminée du fond 26 de la préforme 22. Le distance « d » est par exemple de l'ordre du millimètre. La distance « d » est sélectionnée de manière à permettre au flux de gaz sous pression injecté par la buse 39 de chasser des poussières déposées en fond 26 de la préforme 22 et sur la face 29 interne vers l'extérieur de la préforme 22 en sortant par le col 28.

Le dispositif 20 de dépoussiérage est destiné à traiter des préformes 22 de longueurs différentes. Pour ce faire, il est nécessaire de pouvoir ajuster la course de coulissement des chariots 40 de manière à éviter que les tubes 36 d'insufflation ne touchent le fond 26 des préformes 22 ou au contraire ne soient pas insérés assez profondément pour permettre un bon dépoussiérage. A cet effet, la position «P0» axiale escamotée est fixe tandis que la position «P1» axiale active est ajustable en fonction du modèle de préformes traité par le dispositif de dépoussiérage.

Dans l'exemple représenté aux figures, la course de coulissement de chaque chariot 40 est délimitée vers le haut par contact entre une butée 46A supérieure portée par le support 38 mobile avec une face 46B supérieure d'arrêt portée par le chariot 40 et vers le bas par contact entre une butée 48A inférieure portée par le support 38 mobile avec une face 48B inférieure d'arrêt portée par le chariot 40. Il est possible de faire varier la longueur de course en déplaçant axialement la butée 48A inférieure par rapport au support 38 mobile et/ou en déplaçant axialement la face 48B inférieure d'arrêt par rapport au chariot 40.

Chaque chariot 40 porte ici une pluralité de tubes 36 d'insufflation, par exemple six tubes 36 d'insufflation. Ainsi, plusieurs tubes 36 d'insufflation sont fixés sur chaque chariot 40.

En variante, chaque chariot 40 peut aussi ne porter qu'un seul tube 36 d'insufflation.

Chaque tube 36 d'insufflation est ici monté coaxialement avec l'axe « Z0 » de la préforme 22 portée par l'organe 34 de maintien associé.

En variante, chaque tube 36 d'insufflation est légèrement excentré par rapport à l'axe « Z0 » de la préforme 22 associée, mais il est toujours agencé au droit de l'ouverture du col 28 de la préforme 22.

Le coulissement de chaque chariot 40 est commandé par au moins un actionneur 50 associé, schématiquement représenté aux figures 4 et 5. L'actionneur 50 comporte à cet effet une partie 52 fixe qui est fixée au support 38 mobile associé et une partie 54 motrice qui est fixée au chariot 40.

Dans le mode de réalisation représenté aux figures, chaque chariot 40 comporte un unique actionneur 50 qui permet de commander simultanément le coulissement de tous les tubes 36 d'insufflation portés par ledit chariot 40.

Un tel actionneur 50 est par exemple formé par un moteur électrique piloté par un collecteur tournant. En variante, l'actionneur 50 est formé par un vérin électrique ou pneumatique ou par tout autre moyen de motorisation connu et adapté.

L'actionneur 50 est piloté automatiquement par une unité 56 électronique de commande. Il est par exemple commandé en fonction de la localisation du chariot 40 le long du circuit fermé.

Le dispositif 20 de dépoussiérage permet ainsi de dépoussiérer les préformes 22 pendant leur transport.

Dans l'exemple non limitatif représenté à la [Fig.1], le support 38 mobile est formé par un carrousel monté rotatif autour d'un axe "Z1" central axial par rapport au sol 58.

Le support 38 mobile est plus particulièrement entraîné en rotation continue, ici dans un sens antihoraire comme indiqué par une flèche F de la [Fig.1], par un arbre 60 axial d'axe "Z1" central, visible à la [Fig.2], par exemple au moyen d'un moteur électrique non représenté.

Le support 38 mobile embarque les organes 34 de maintien des préformes 22. De ce fait, le circuit fermé présente une forme circulaire. Les organes 34 de maintien permettent d'entraîner les préformes 22 en file le long d'une trajectoire commune en arc de cercle centrée sur l'axe "Z1" central.

Les organes 34 de maintien sont ici formés par des encoches en forme de demi-cercle réalisées en périphérie extérieure d'une couronne 62. La couronne 62 est montée fixe sur le support 38 mobile. Chaque organe 34 de maintien permet de loger la partie du corps 24 de la préforme 22 située juste au-dessous de la collerette 30, tandis que la collerette 30 repose sur une face supérieure de la couronne 62 permettant ainsi d'entraîner la préforme 22 le long de sa trajectoire.

En variante non représentée de l'invention, les organes de maintien sont formés par des pinces qui saisissent chaque préforme juste au-dessus ou juste au-dessous de leur collerette.

Pour empêcher les préformes 22 de tomber sous l'effet de la force centrifuge lors de la rotation du support 38 mobile, un guide 64 arqué, fixe par rapport au sol 58, est agencé le long de la trajectoire en arc de cercle des préformes 22. Les préformes 22 glissent ainsi le long du guide 64 qui permet de les retenir radialement à l'intérieur de leurs organes 34 de maintien associé.

La couronne 62 comporte par exemple trente-deux ou quarante-deux organes 34 de maintien répartis régulièrement à sa périphérie. Le dispositif 20 de dépoussiérage est conçu pour permettre de transporter et de dépoussiérer un grand débit de préformes 22, par exemple de l'ordre de 60000 préformes par heure.

Comme représenté à la [Fig.1], les préformes 22 sont acheminées jusqu'à une entrée 66 du dispositif 20 de dépoussiérage par une roue 68 d'entrée schématisée par un cercle à la [Fig.1]. Les préformes 22 sont transférée, après dépoussiérage, sur une roue 70 de sortie schématisée par un cercle à la [Fig.1], au niveau d'une sortie 72. Les roues 68, 70 d'entrée et de sortie sont par exemple des roues à encoches présentant des organes de maintien similaires aux organes 34 de maintien du support 38 mobile. Entre l'entrée 66 et la sortie 72, la trajectoire des préformes 22 s'étend ici sur un secteur angulaire supérieur à 180°, par exemple de l'ordre de 300°.

Le support 38 mobile est aussi équipé de plusieurs postes 74 de dépoussiérage qui permettent de dépoussiérer les préformes 22 pendant leur transport depuis l'entrée 66 jusqu'à la sortie 72. Chaque poste 74 de dépoussiérage est embarqué sur le support 38 mobile, c'est-à-dire que chaque poste 74 de dépoussiérage est entraîné en rotation autour de l'axe "Z1" central solidairement avec le support 38 mobile.

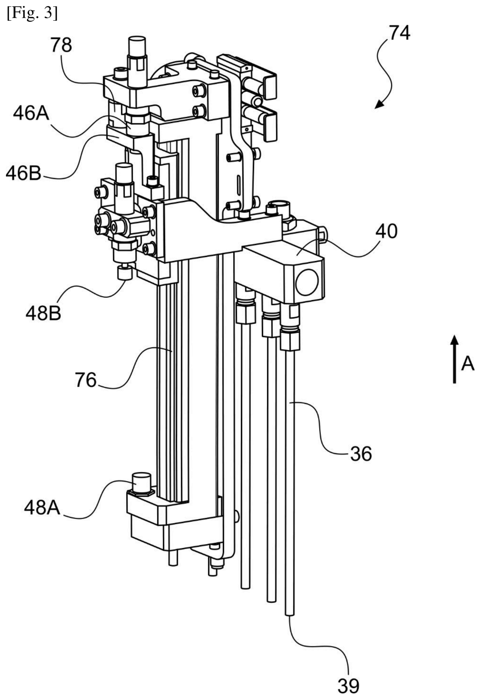

Comme cela est représenté aux figures 2 et 3, chaque poste 74 de dépoussiérage comporte au moins un des tubes 36 d'insufflation qui est embarqué sur le support 38 mobile. Chaque tube 36 d'insufflation est agencé axialement en correspondance avec un des organes 34 de maintien. Ainsi, le support 38 mobile comporte autant de tube 36 d'insufflation que d'organe 34 de maintien.

Dans le mode de réalisation représenté aux figures, chaque poste 74 de dépoussiérage comporte six tubes 36 d'insufflation.

Comme représenté à la [Fig.3], les tubes 36 d'insufflation d'un même poste 74 de dépoussiérage sont fixés à un chariot 40 commun. Le chariot 40 est ici monté coulissant sur le support 38 mobile par l'intermédiaire d'une glissière 76 axiale. La glissière 76 est ici fixée au support 38 mobile. Cette liaison coulissante a été représentée par des schémas cinématiques aux figures 4 et 5.

La face 48B inférieure d'arrêt est ici portée par une vis qui est vissée axialement sur le chariot 40 de manière à pouvoir modifier aisément sa position axiale par rapport au chariot 40 en la vissant ou en la dévissant.

Quelle que soit la variante de réalisation choisie, le dispositif 20 de dépoussiérage comporte des organes 78 mobiles de détection de la présence d'un chariot 40 associé dans une première position axiale déterminée.

Dans le mode de réalisation représenté aux figures, chaque organe 78 mobile de détection est apte à détecter la présence d'un chariot 40 associé uniquement dans une première position axiale déterminée.

En d'autres termes, l'organe 78 mobile de détection ne peut pas détecter la position de la canule en dehors de cette position axiale déterminée. Cela permet de réduire le coût de fabrication du dispositif 20 de dépoussiérage.

Chaque chariot 40 est associé avec un organe 78 mobile de détection. Chaque organe 78 mobile de détection est monté sur le support 38 mobile et ainsi déplacé conjointement avec le chariot 40 le long du circuit fermé.

Grâce à cet agencement, chaque organe 78 mobile de détection contrôle en permanence tout au long du circuit si le chariot 40 associé occupe ladite première position axiale déterminée. Cela permet ainsi de surveiller individuellement que chaque actionneur 50 est fonctionnel et/ou de surveiller le temps de réponse de chaque actionneur 50 et/ou de réaliser des procédés de dépoussiérage complexes, comme cela sera expliqué par la suite.

Chaque organe 78 mobile de détection est ici susceptible de détecter que le chariot 40 occupe sa première position axiale déterminée ou qu'il n'occupe pas cette première position axiale déterminée.

Chaque organe 78 mobile de détection est par exemple formé par un capteur de contact, tel qu'un interrupteur déclenché lorsque le chariot 40 occupe sa première position axiale déterminée.

En variante non représentée de l'invention, l'organe mobile de détection peut aussi être un capteur sans contact tel qu'un capteur magnétique, un capteur photoélectrique ou encore un capteur de proximité inductif.

Chaque organe 78 mobile de détection est par exemple en communication avec l'unité 56 électronique de commande afin que celle-ci puisse déterminer le temps de réponse de l'actionneur 50 et/ou vérifier que l'actionneur 50 fonctionne correctement.

Dans le mode de réalisation représenté aux figures, au moins un des organes 78 mobiles de détection détecte la présence du chariot 40 dans sa position «P0» axiale escamotée. Ici, chaque chariot 40 est associé avec un tel organe 78 mobile de détection. Comme représenté aux figures 4 et 5, l'organe 78 mobile de détection est fixé à une extrémité supérieure de la glissière 76.

En variante non représentée de l'invention, chaque chariot 40 peut aussi être associé à au moins un des organes mobiles de détection qui détecte la présence du chariot dans une position axiale intermédiaire entre sa position «P1» axiale active et sa position «P0» axiale escamotée.

Dans le mode de réalisation représenté aux figures, le dispositif 20 de dépoussiérage comporte aussi un organe 80 fixe de détection de la présence de chaque chariot 40 dans une deuxième position axiale déterminée lorsqu'ils passent dans une zone 82 de détection du circuit. L'organe 80 fixe de détection est ainsi monté fixe par rapport au sol 58.

Ainsi, l'organe 80 fixe contrôle successivement que chaque chariot 40 occupe sa deuxième position axiale déterminée lors de leurs passages successifs dans la zone 82 de détection du circuit fermé. L'organe 80 fixe de contrôle est donc commun à tous le chariot 40.

Cela présente l'avantage de pouvoir détecter que chaque chariot 40 occupe sa deuxième position axiale déterminée avec un unique organe 80 fixe de détection.

Ladite deuxième position axiale déterminée détectée par l'organe 80 fixe de détection est ici une position axiale différente de la première position axiale déterminée détectée par les organes 78 mobiles de détection.

Dans le mode de réalisation représenté aux figures, l'organe 80 fixe de détection détecte la présence de chaque chariot 40 dans sa position «P1» axiale active.

Cela permet de n'avoir à modifier que la position axiale d'un seul organe 80 fixe de détection lorsque la course axiale des tubes 36 d'insufflation est modifiée.

Cependant, un tel agencement ne permet pas de contrôler en permanence si chaque chariot 40 occupe sa position «P1» axiale active en dehors de la zone 82 de détection du circuit fermé.

En variante non représentée de l'invention, chaque chariot 40 peut aussi être associé à au moins un organe mobile de détection qui détecte la présence du chariot dans sa position «P1» axiale active. En ce cas, il est nécessaire de pouvoir faire varier la position axiale d'un tel organe mobile de détection lorsqu'on ajuste la position «P1» axiale active du tube 36 d'insufflation.

L'organe 80 fixe de détection est en communication avec l'unité 56 électronique de commande afin que celle-ci puisse déterminer que chaque chariot 40 occupe bien sa position «P1» axiale active lors de son passage dans la zone 82 de détection.

De préférence, l'organe 80 fixe de détection est un capteur sans contact tel qu'un capteur magnétique, un capteur photoélectrique ou encore un capteur de proximité inductif. Il est ici monté sur un poteau 84 qui est fixe par rapport au sol 58 et qui est agencé en vis-à-vis de la zone 82 de détection.

Lors du fonctionnement du dispositif 20 de dépoussiérage avec un procédé de dépoussiérage dit « cycle simple », chaque tube 36 d'insufflation parcourt le circuit fermé divisé d'amont en aval en plusieurs secteurs fixes par rapport au sol 58 qui ont été représenté à la [Fig.1]. On décrit le fonctionnement du dispositif 20 de dépoussiérage pour un cycle simple d'un tube 36 d'insufflation, la description étant applicable à chacun des tubes 36 d'insufflation en référence à la [Fig.6].

La [Fig.6] représente en abscisse la localisation du chariot 40 le long du circuit fermé, en traits pointillés la position axiale du chariot 40 le long de son axe de coulissement, en traits pleins le déclenchement de l'insufflation d'air sous pression.

Le long d'un premier secteur, appelé par la suite secteur "S0" primaire escamoté, le chariot 40 et le tube 36 d'insufflation associé occupe sa position «P0» axiale escamotée. Le long de ce premier secteur "S0" primaire escamoté, chaque préforme 22 est réceptionnée dans un des organes 34 de maintien à l'entrée 66 alors que le tube 36 d'insufflation associé demeure dans sa position «P0» axiale escamotée.

L'organe 78 mobile de détection associé au chariot 40 permet de contrôler que le chariot 40 demeure dans sa position «P0» axiale escamotée.

Puis a lieu une étape «Ei» initiale de commande du chariot 40 portant le tube 36 d'insufflation associé à la préforme 22 jusqu'à sa position «P1» axiale active dans laquelle le tube 36 d'insufflation est inséré dans la préforme 22 portée par l'organe 34 de maintien.

Lors de cette étape «Ei» initiale de commande, le support 38 mobile poursuit son déplacement, amenant le tube 36 d'insufflation jusqu'à un deuxième secteur, appelé par la suite secteur "S1" primaire d'insertion, le long duquel le tube 36 d'insufflation se déplace depuis sa position «P0» axiale escamotée jusqu'à sa position «P1» axiale active. Ce secteur "S1" primaire d'insertion s'étend par exemple sur environ 25°.

L'organe 78 mobile de détection permet de contrôler que le chariot 40 a bien quitté sa position «P0» axiale escamotée. Il permet en outre de connaître le temps de réaction de l'actionneur 50 en détectant à quel moment le chariot 40 quitte sa position «P0» axiale escamotée par rapport au moment auquel la commande de déplacement est envoyée à l'actionneur 50 par l'unité 56 électronique de commande.

A l'issue de l'étape «Ei» initiale de commande, lorsque le tube 36 d'insufflation atteint sa position «P1» axiale active, il entre dans un troisième secteur de son circuit fermé, appelé par la suite secteur "S2" primaire inséré, le long duquel chaque tube 36 d'insufflation demeure dans sa position «P1» axiale active.

La zone 82 de détection est agencée dans une partie amont du secteur "S2" primaire inséré de manière que l'organe 80 fixe de détection puisse détecter que le chariot 40 occupe bien sa position «P1» axiale active.

De l'air sous pression est insufflé dans la préforme 22 par l'intermédiaire du tube 36 d'insufflation à l'issue de l'étape «Ei» initiale.

La buse 39 d'insufflation émet alors un jet continu de gaz de traitement sous pression qui chasse tout corps étrangers, notamment poussières, cartons, sciures, contenus dans la préforme 22 à l'extérieur en remontant le long de la face 29 interne de la préforme 22 jusqu'au col 28. Les poussières chassées à l'extérieur de la préforme 22 sont ensuite récoltées par un aspirateur à poussière (non représenté) pour éviter de polluer les autres préformes 22. Le secteur "S2" primaire inséré s'étend par exemple sur environ 120°.

L'air sous pression est de préférence insufflé en continu au moins jusqu'au début d'une étape « Ef » finale. Dans l'exemple représenté à la [Fig.6], l'air sous pression est insufflé en continu jusqu'à la fin de l'étape « Ef » finale.

Lors de l'étape «Ef» finale de commande, le chariot 40 portant le tube 36 d'insufflation associé à la préforme 22 est déplacé jusqu'à sa position «P0» axiale escamotée dans laquelle le tube 36 d'insufflation est totalement extrait de la préforme 22 portée par l'organe 34 de maintien.

Cette étape «Ef» finale est déclenchée lorsque le tube 36 d'insufflation atteint un quatrième secteur, appelé par la suite secteur "S3" primaire d'escamotage. Le tube 36 d'insufflation se déplace depuis sa position «P1» axiale active jusqu'à sa position «P0» axiale escamotée. Ce secteur primaire "S3" d'escamotage s'étend par exemple sur environ 25°.

L'organe 78 mobile de détection permet de contrôler que le chariot 40 est bien revenu dans sa position «P0» axiale escamotée. Il permet en outre de connaître le temps de réaction de l'actionneur 50 en détectant à quel moment le chariot 40 atteint sa position «P0» axiale escamotée par rapport au moment auquel la commande de déplacement est envoyée à l'actionneur 50 par l'unité 56 électronique de commande.

Lorsque le tube 36 d'insufflation atteint sa position «P0» axiale escamotée, il revient dans le secteur "S0" primaire escamoté de sa trajectoire. Le tube 36 d'insufflation atteint sa position «P0» axiale escamotée avant que la préforme 22 n'atteigne la sortie 72 afin de permettre le transfert de la préforme 22 ainsi dépoussiérée vers la roue 70 de sortie.

La présence des organes 78 mobiles de détection permet néanmoins de réaliser des procédés de dépoussiérage plus complexes, dits « cycles complexes », permettant d'améliorer encore l'efficacité du dépoussiérage des préformes 22.

Ces cycles complexes comprennent toutes les étapes du cycle simple décrit précédemment, cependant il est ici prévu de faire coulisser au moins une fois le tube 36 d'insufflation jusqu'à sa position «P0» axiale escamotée puis jusqu'à sa position «P1» axiale active entre l'étape «Ei» initiale et l'étape «Ef» finale.

Un tel cycle complexe comporte au moins les étapes suivantes insérées chronologiquement après l'étape «Ei» initiale et avant l'étape «Ef» finale.

Ainsi, après l'étape «Ei» initiale et une première opération d'insufflation d'air, une première étape « E1 » intermédiaire est déclenchée. Lors de cette première étape « E1 » intermédiaire, le chariot 40 portant le tube 36 d'insufflation associé à la préforme 22 est commandé jusqu'à sa position «P0» axiale escamotée dans laquelle le tube 36 d'insufflation est totalement extrait dans la préforme 22 portée par l'organe 34 de maintien. L'organe 78 mobile de détection associé au chariot 40 permet de détecter lorsque le chariot 40 atteint sa position «P0» axiale escamotée.

Cette première étape « E1 » intermédiaire est déclenchée lorsque le tube 36 d'insufflation atteint un cinquième secteur, appelé par la suite secteur "S4" intermédiaire d'escamotage situé entre le secteur « S2 » primaire inséré et le secteur « S3 » primaire d'escamotage. Le tube 36 d'insufflation se déplace depuis sa position «P1» axiale active jusqu'à sa position «P0» axiale escamotée. Ce secteur "S4" intermédiaire d'escamotage s'étend par exemple sur environ 25°.

L'organe 78 mobile de détection permet de contrôler que le chariot 40 est bien revenu dans sa position «P0» axiale escamotée. Il permet en outre de connaître le temps de réaction de l'actionneur 50 en détectant à quel moment le chariot 40 atteint sa position «P0» axiale escamotée par rapport au moment auquel la commande de déplacement est envoyée à l'actionneur 50 par l'unité 56 électronique de commande.

A l'issue de cette première étape « E1 » intermédiaire, une deuxième étape « E2 » intermédiaire est déclenchée. Lors de cette deuxième étape « E2 » intermédiaire, le chariot 40 portant le tube 36 d'insufflation associé à la préforme 22 est commandé jusqu'à sa position «P1» axiale active dans laquelle le tube 36 d'insufflation est inséré dans la préforme 22 portée par l'organe 34 de maintien.

Lors de cette deuxième étape « E2 » intermédiaire, le support 38 mobile poursuit son déplacement, amenant le tube 36 d'insufflation jusqu'à un sixième secteur, appelé par la suite secteur "S5" intermédiaire d'insertion, le long duquel le tube 36 d'insufflation se déplace depuis sa position «P0» axiale escamotée jusqu'à sa position «P1» axiale active.

Ce secteur "S5" intermédiaire d'insertion s'étend par exemple sur environ 25°. Ainsi, la première étape « E1 » intermédiaire et la deuxième étape « E2 » intermédiaire s'étalent sur environ 50° sur les 120° compris entre l'étape «Ei» initiale et l'étape «Ef» finale.

Il est situé directement en aval du secteur « S4 » intermédiaire d'escamotage, c'est-à-dire que le chariot 40 redescend directement vers sa position «P1» axiale active dès qu'il a atteint sa position «P0» axiale escamotée. Ceci est notamment permis par la présence de l'organe 78 mobile de détection qui permet de commander l'actionneur 50 directement pour faire redescendre le chariot 40 vers sa position «P1» axiale active dès qu'il a atteint sa position «P0» axiale escamotée pour éviter de perdre du temps.

L'organe 78 mobile de détection permet de contrôler que le chariot 40 a bien quitté sa position «P0» axiale escamotée. Il permet en outre de connaître le temps de réaction de l'actionneur 50 en détectant à quel moment le chariot 40 quitte sa position «P0» axiale escamotée par rapport au moment auquel la commande de déplacement est envoyée à l'actionneur 50 par l'unité 56 électronique de commande.

Ensuite, à l'issue de la deuxième étape « E2 » intermédiaire, lorsque le tube 36 d'insufflation atteint sa position «P1» axiale active pour la deuxième fois lors du cycle complexe, il entre dans un septième secteur de son circuit fermé, appelé par la suite secteur "S6" intermédiaire inséré, le long duquel chaque tube 36 d'insufflation demeure dans sa position «P1» axiale active. De l'air sous pression est alors insufflé dans la préforme 22 par l'intermédiaire du tube 36 d'insufflation.

La buse 39 d'insufflation émet alors un jet continu de gaz de traitement sous pression qui chasse les poussières contenues dans la préforme 22 à l'extérieur en remontant le long de la face 29 interne de la préforme 22 jusqu'au col 28. Les poussières chassées à l'extérieur de la préforme 22 sont ensuite récoltées par un aspirateur à poussière (non représenté) pour éviter de polluer les autres préformes 22.

Lorsque le chariot 40 arrive dans le secteur « S3 » primaire d'escamotage, tel que défini dans la description du cycle simple, l'étape «Ef» finale est déclenchée comme décrit précédemment.

Dans un tel cycle complexe, l'air sous pression est de préférence insufflé de manière discontinue entre la fin de l'étape «Ei» initiale et le début de l'étape «Ef» finale.

L'air sous pression est ici insufflé uniquement lorsque le chariot 40 occupe sa position «P1» axiale active.

En variante, l'air sous pression est par exemple insufflé aussi lors des étapes « El, E2 » intermédiaires, par exemple lorsque le chariot coulisse vers sa position «P0» axiale escamotée uniquement ou lorsque le chariot coulisse vers sa position «P1» axiale active uniquement.

En variante, l'air sous pression est insufflé de manière continue entre la fin de l'étape «Ei» initiale et le début de l'étape «Ef» finale.

On a constaté qu'un tel cycle complexe permettait d'évacuer une plus grande quantité de poussières qu'un cycle simple.

La présence des organes 78 mobiles de détection permettent de savoir si l'un des actionneur 50 ne présente pas un temps de réponse permettant de réaliser correctement un tel cycle complexe en fonction de la cadence de fonctionnement de l'installation de production. Si tel n'est pas le cas, le dispositif 20 de dépoussiérage est à nouveau commandé pour réaliser des cycles simples.

Les organes 78 mobiles de détection permettent en outre de détecter un dysfonctionnement d'un actionneur 50 et d'identifier lequel des actionneurs 50 présente un tel dysfonctionnement.

Les organes 78 mobiles de détection permettent en outre, en fournissant les informations nécessaires au calcul du temps de réponse des actionneurs 50, de prévoir à l'avance des opérations de maintenance de certains actionneurs 50 considérés comme trop lent, par exemple en remplaçant des pièces d'usure.

## Revendications

1. Dispositif (20) de dépoussiérage de l'intérieur de préformes (22) en matière thermoplastique par insufflation de gaz de traitement qui comporte :
- un dispositif (32) de transport comportant des organes (34) de maintien des préformes (22) mobiles le long d'un circuit fermé ;
- des tubes (36) d'insufflation dont chacun est monté sur un support (38) mobile pour être déplacé en coïncidence avec un desdits organes (34) de maintien associé le long du circuit fermé ;
- chaque tube (36) d'insufflation étant monté coulissant axialement sur le support (38) mobile par l'intermédiaire d'un chariot (40) coulissant entre une position (P1) axiale active dans laquelle le tube (36) d'insufflation est destiné à être inséré à l'intérieur d'une préforme (22) portée par l'organe (34) de maintien associé, et une position (P0) axiale escamotée dans laquelle le tube (36) d'insufflation est destiné à être à l'extérieur d'une préforme (22) portée par l'organe (34) de maintien associé,
**caractérisé en ce qu'**il comporte des organes (78) mobiles de détection de la présence d'un chariot (40) associé dans une première position axiale déterminée, chaque organe (78) mobile de détection étant monté sur le support (38) mobile et chaque organe (78) mobile de détection contrôlant en permanence tout au long du circuit si le chariot (40) associé occupe ladite position axiale déterminée.

2. Dispositif (20) selon la revendication précédentes, **caractérisé en ce qu'**au moins un des organes (78) mobiles de détection détecte la présence du chariot (40) dans sa position (P0) axiale escamotée.

3. Dispositif (20) selon l'une quelconque des revendications précédentes, **caractérisé en ce qu'**au moins un des organes (78) mobiles de détection détecte la présence du chariot (40) dans une position axiale intermédiaire entre sa position (P1) axiale active et sa position (P0) axiale escamotée.

4. Dispositif (20) selon l'une quelconque des revendications précédentes, **caractérisé en ce qu'**au moins un des organes (78) mobiles de détection détecte la présence du chariot (40) dans sa position (P1) axiale active.

5. Dispositif (20) selon l'une quelconque des revendications précédentes, **caractérisé en ce que** chaque chariot (40) est commandé par un actionneur (50) indépendant associé.

6. Dispositif (20) selon l'une quelconque des revendications précédentes, **caractérisé en ce que** plusieurs tubes (36) d'insufflation sont fixés sur chaque chariot (40).

7. Dispositif (20) selon l'une quelconque des revendications précédentes, **caractérisé en ce qu'**il comporte un organe (80) fixe de détection de la présence de chaque chariot (40) dans une position axiale déterminée lorsqu'ils passent dans une zone (82) de détection du circuit fermé.

8. Dispositif (20) selon la revendication précédente, **caractérisé en ce que** l'organe (80) fixe de détection détecte la présence de chaque chariot (40) dans sa position (P1) axiale active.

9. Dispositif (10) selon l'une quelconque des revendications précédentes, **caractérisé en ce que** la position (P0) axiale escamotée est fixe tandis que la position (P1) axiale active est ajustable en fonction du modèle de préforme (22) traité par le dispositif (20) de dépoussiérage.

10. Procédé de dépoussiérage de l'intérieur d'une préforme mettant en œuvre le dispositif (20) de dépoussiérage selon l'une quelconque des revendications précédentes, le procédé comportant au moins :
- une étape (Ei) initiale de commande du chariot (40) portant le tube (36) d'insufflation associé à la préforme jusqu'à sa position (P1) axiale active dans laquelle le tube (36) d'insufflation est inséré dans la préforme (22) portée par l'organe (34) de maintien ;
- une étape (Ef) finale de commande du chariot (40) portant le tube (36) d'insufflation associé à la préforme (22) jusqu'à sa position (P0) axiale escamotée dans laquelle le tube (36) d'insufflation est totalement extrait dans la préforme (22) portée par l'organe (34) de maintien ;
**caractérisé en ce qu'**il comporte au moins les étapes suivantes insérées chronologiquement après l'étape (Ei) initiale et avant l'étape (Ef) finale:
- une première étape (E1) intermédiaire de commande du chariot (40) portant le tube (36) d'insufflation associé à la préforme (22) jusqu'à sa position (P0) axiale escamotée dans laquelle le tube (36) d'insufflation est totalement extrait de la préforme (22) portée par l'organe (34) de maintien ;
- une deuxième étape (E2) intermédiaire de commande du chariot (40) portant le tube (36) d'insufflation associé à la préforme (22) jusqu'à sa position (P1) axiale active dans laquelle le tube (36) d'insufflation est inséré dans la préforme (22) portée par l'organe (34) de maintien.

11. Procédé selon la revendication précédente, **caractérisé en ce que** de l'air sous pression est insufflé dans la préforme (22) par l'intermédiaire du tube (36) d'insufflation à l'issue de l'étape (Ei) initiale.

12. Procédé selon la revendication 11, **caractérisé en ce que** l'air sous pression est insufflé en continu jusqu'au début de l'étape (Ef) finale.

13. Procédé selon la revendication 11, caractérisé en que l'air sous pression est insufflé de manière discontinue entre la fin de l'étape (Ei) initiale et le début de l'étape (Ef) finale.

14. Procédé selon la revendication précédente, **caractérisé en ce que** l'air sous pression est insufflé uniquement lorsque le chariot (40) occupe sa position (P1) axiale active.
